# EUROPÄISCHE PATENTANMELDUNG

(11) **EP 1 070 642 A2**
(43) Veröffentlichungstag der Anmeldung: **24.01.2001**
(21) Anmeldenummer: 00115261.0
(22) Anmeldetag: 14.07.2000
(51) Int. Cl.: B60S 1/48

(54) **Heizvorrichtung für Scheibenwaschanlage**

(30) Priorität: 22.07.1999 DE 19934346
(71) Anmelder: REHAU AG + Co, 95111 Rehau (DE)
(72) Erfinder: Rudolf, Manfred, Dr., 95111 Rehau (DE); Broermann, Carsten, 95111 Rehau (DE); Scheiterlein, Bernd, 95111 Rehau (DE)

(57) **Zusammenfassung**

Die Erfindung betrifft eine Vorrichtung zum Einsatz in Scheibenwaschanlagen von Fahrzeugen zur Beheizung von durch eine Leitung mit einem durch eine Wandung definerten Lumen fließenden Strömungsmedium, einem elektrische Heizleiter, wenigstens einem Anschlußelement, einem Abdichtelement und einem Abdeckelement, wobei sich der Heizleiter frei im Lumen der Leitung erstreckt und gegen die im Lumen der Leitung fließenden Strömungsmedien isoliert ist und wobei der Heizleiter durch Anschlußelemente auf dem Lumen der Leitung nach außen geführt und elektrisch angeschlossen ist. Die erfindungsgemäße Vorrichtung soll kostengünstig und wirtschaftlich herstellbar sein, einfach montierbar und einen kleinen Bauraum einnehmen. Sie soll weiterhin für die im Motorraum herrschenden Umgebungsbedingungen geeignet sein und dauerhaft dicht und beständig gegen die in Scheibenwaschanlagen verwendeten Medien sein. Erfindungsgemäß wird dies dadurch gelöst, daß das Abdichtelement ein größeres Volumen aufweist als die kommunizierende Aufnahmeöffnung des Anschlußelementes, wobei das Abdichtelement aus einem elastisch verformbaren Material besteht, daß das Abdichtelement wenigstens eine in seiner Abmessung mit einem größeren Durchmesser als der Heizleiter durchgehende Öffnung aufweist und durch wenigsten ein lösbar mit dem Anschlußelement verbundenen Abdeckelement mit diesem fixiert ist.

## Beschreibung

Die Erfindung betrifft eine Vorrichtung zum Einsatz in Scheibenwaschanlagen von Fahrzeugen zur Beheizung von durch eine Leitung mit einem durch eine Wandung definierten Lumen fließenden Strömungsmedium, einem elektrischen Heizleiter, wenigstens einem Anschlußelement, einem Abdichtelement und einem Abdeckelement, wobei sich der Heizleiter frei im Lumen der Leitung erstreckt und gegen die im Lumen der Leitung fließenden Strömungsmedien isoliert ist und wobei der Heizleiter durch Anschlußelemente aus dem Lumen der Leitung nach außen geführt und elektrisch angeschlossen ist.

Aus der Europäischen Patenanmeldung EP 0 240 832 ist eine gattungsgemäße Vorrichtung bekannt.
Diese elektrische Heizvorrichtung für Scheibenwaschanlagen von Fahrzeugen besteht aus wenigstens einer Spritzdüse und einem Behälter für Waschflüssigkeit, sowie einer Flüssigkeitsleitung mit einer elektrischen Stromquelle. Diese soll in Aufbau und Herstellung einfach und betriebssicher sein, sowie kostengünstig in Herstellung und Wartung bleiben.

Dazu ist in der Flüssigkeitsleitung eine Hinleitung und eine Rückleitung zumindest eines isolierten Heizdrahtes vorgesehen, dessen beide freien Enden jeweils mit einem nach außen ragenden Stromanschluß verbunden und gegen das Medium in der Flüssigkeitsleitung isoliert sind. Dabei sollte der Heizdraht zumindest aus dem einem Ende der Flüssigkeitsleitung mit einem Steck- oder Schubende hinausragen, welches bevorzugt aus einem U-förmig gelegten Abschnitt des Heizdrahtes besteht.

Es soll sich mit dieser Heizdrahtanordnung eine sehr effektive Heizung sämtlicher, den Strömungsraum für die Waschflüssigkeit bildender Einzelaggregate ergeben. Die Stromanschlüsse werden innerhalb eines Einspeisekörpers realisiert, indem die Enden des Heizdrahtes mit den entsprechenden Stromanschlußenden verbunden sind. Der Einspeisekörper ist mit einem Durchflußraum für die Waschflüssigkeit versehen, in den beidseits die Schlauchanschlußstutzen des Einspeisekörpers münden und neben denen Ausnehmungen abgebracht sind. In diesen Ausnehmungen befinden sich die Anschlußenden der Stromanschlüsse mit den daran festliegenden freien Enden des Heizdrahtes. Diese Ausnehmungen sind durch eine duroplastische Vergußmasse gegen die Waschflüssigkeit der Durchflußleitung isoliert.

Weiterhin wird ein kreuzartiger Formkörper beschrieben, der aus zwei koaxialen Schlauchstutzen und von denen wieder rechtwinklig abstehenden Anschlußarmen besteht, in denen mit Hin- und Rückleitungen verbundene Stromanschlußzungen eingebracht sind. Hier erfolgt die Isolierung zur Waschflüssigkeit über ein sogenanntes Einschubrohr, welches in den Schlauchstutzen eingeführt wird, so daß die Hin- und die Rückleitung der Heizdrähte sich an der Außenseite des Einschubrohres im Zwischenraum zum Schraubstutzen befinden. Diese Hin- und Rückleitungen der Heizdrähte müssen dann in den Anschlußarmen miteinander kontaktiert und von diesen herausgeführt werden.

Nachteilig bei diesem kreuzartigen Formkörper ist neben der sehr aufwendigen Montage durch das Einfädeln der Hin- und Rückleitungen der Heizdrähte durch zwei Schlauchstutzen sowie dem danach einzuführenden Einschubrohr, die dadurch mangelhaft erreichbare elektrische Isolierung. Durch den Ringspalt zwischen dem Einschubrohr und dem kreuzartigen Formkörper, in dem sich die Hin- und Rückleitungen der Heizdrähte befinden, kann auch Waschflüssigkeit eindringen und bis zur Kontaktstelle in den rechtwinklig abstehenden Anschlußarmen gelangen und so zu einem Kurzschluß führen. Dieses System ist somit beispielsweise für den Großserieneinsatz bei Fahrzeugen extrem störanfällig und zudem nicht wirtschaftlich.

Hier kann es sich als zweckmäßiger erweisen, die Öffnungen der Anschlußarme ebenso wie den Einspeisekörper mit einer duroplastischen Vergußmasse auszufüllen und die Kontaktstellen so sicher einzubetten.

Diese vorgeschlagenen Lösungen für elektrische Heizvorrichtungen in Scheibenwaschanlagen von Fahrzeugen sind aufgrund der aufwendigen Konfektions- und Montageschritte nicht wirtschaftlich für einen Großserieneinsatz.
Weiterhin erweist sich sowohl das Einbetten der Anschlußenden im Einspeisekörper als auch das mögliche Einbetten der Kontaktstellen im kreuzartigen Formkörper als sehr aufwendig und teuer. Neben dem schwierigen Einfädeln der Hin- und Rückleitungen der Heizdrähte in die entsprechenden Ausnehmungen des Einspeisekörpers sowie dem sicheren Kontaktieren,
erweist sich die Einbettung mit der duroplastischen Formmasse als zu zeit- und kostenaufwendig.

Ein weiterer Nachteil dieses Systems besteht darin, daß die Hin- und Rückleitungen der Heizdrähte mit den Anschlußenden bzw. die Kontaktstellen gegen eine Waschflüssigkeit im Durchflußkörper isoliert sind, jedoch können diese nicht wieder demontiert werden. Weiterhin ragen aus den am Einspeisekörper angeformten Schlauchanschlußstutzen die Hin- und Rückleitungen der Heizdrähte in der für den jeweiligen Verwendungszweck definierten Länge heraus, wobei hier Längen von 30 - 100 cm mögt ich sind.

Eine Montage derartiger elektrischer Heizvorrichtungen in Scheibenwaschanlagen für Fahrzeuge läßt sich nur mit sehr hohem personellen Aufwand betreiben und ist somit nicht wirtschaftlich.

Ein weiterer Nachteil des Standes der Technik besteht darin, daß die beschriebenen Einspeisekörper mit den integrierten Schlauchanschlußstutzen zu groß sind und so beispielsweise beim Einsatz im Motorraum von Fahrzeugen zuviel Platz wegnehmen.

Hier setzt die Erfindung ein, die sich zur Aufgabe gestellt hat, eine Vorrichtung aufzuzeigen, die kostengünstig und wirtschaftlich herstellbar ist, die einfach montierbar ist und einen kleinen Bauraum einnimmt, die für die im Motorraum herrschenden Umgebungsbedingungen geeignet ist und die dauerhaft dicht und beständig gegen die in Scheibenwaschanlagen verwendeten Medien ist.

Erfindungsgemäß wird dies dadurch gelöst, daß das Abdichtelement ein größeres Volumen aufweist als die kommunizierende Aufnahmeöffnung des Anschlußelementes, wobei das Abdichtelement aus einem elastisch verformbaren Material besteht, daß das Abdichtelement wenigstens eine in seiner Abmessung mit einem größeren Durchmesser als der Heizleiter, durchgehende Öffnung aufweist und durch wenigstens ein lösbar mit dem Anschlußelement verbundenen Abdeckelement mit diesem fixiert ist.

Hierdurch wird eine dauerhafte Abdichtung der Vorrichtung erreicht, da durch eine Kompression des elastisch deformierbaren Abdichtelementes die Öffnungen mit den hindurchgeleiteten Heizleiter radial verschlossen werden. Das in die Aufnahmeöffnung des Anschlußelementes gepreßte Abdichtelement wird durch das Anschlußelement fixiert und kann vorteilhafterweise jederzeit wieder demontiert werden. Hierdurch ist gewährleistet, daß die Vorrichtung jederzeit sortenrein recycelt werden kann, was dem Umweltgedanken der heutigen Zeit Rechnung trägt.
Die erfindungsgemäße Vorrichtung kann schnell und platzsparend im Motorraum eines Fahrzeuges verbaut werden, so daß hier auch für eine Großserie eine wirtschaftliche Montage möglich ist.

In einer weiteren vorteilhaften Ausführung weist das Abdichtelement eine größere axiale Abmessung auf als die kommunizierende Aufnahmeöffnung des Anschlußelementes. Durch die axiale Kompression des Abdichtelementes wird zum einen die kommunizierende Öffnung des Anschlußelementes komplett abgedichtet, während anderseits die Öffnungen mit dem durch sie hindurchgeleiteten Heizdraht sicher abgedichtet werden.

Weiterhin vorteilhaft wird gesehen, daß das Abdichtelement eine größere radiale Abmessung aufweist als die kommunizierende Aufnahmeöffnung des Anschlußelementes. Durch die im Einbauzustand erzeugte radiale Kompression des Abdichtelementes wird die durchgehende Öffnung im Abdichtelement in ihrem Durchmesser soweit reduziert, daß elastisch deformierbare Material fest um den Heizdraht gepreßt ist und somit eine dauerhafte dichte Verbindung geschaffen ist. Das Abdeckelement, welches lösbar mit dem Anschlußelement verbunden ist, fixiert das Abdichtelement und kann erfindungsgemäß rastend hinter ein vom Anschlußelement wegragende Abkragung hintergreifen, wobei die Erfindung ebenfalls lehrt, daß hier eine Schraubverbindung möglich ist.

Das Abdichtelement ist vorteilhafterweise lösbar mit dem Anschlußelement verbunden, so das bei Demontage der Vorrichtung ein sortenreines Recycling möglich ist.

Das in der erfindungsgemäßen Vorrichtung verwendete Abdichtelement kann vorteilhafterweise eine kegelstumpfförmige Gestalt ausweisen, wobei es ebenso im Rahmen der Erfindung liegt, ein zylindrisches Abdichtelement zu verwenden.
Hierdurch ist es dem Anwender möglich, die Vorrichtung mit den endseitig vorgesehenen Anschlußelementen den jeweiligen Erfordernissen bzgl. der Innendrücke in den Scheibenwaschanlagen bzw. der Temperatur der verwendeten Medien entsprechend anzupassen.

Die Anschlußelemente der erfindungsgemäßen Vorrichtung sind so aufgebaut, daß sie wenigsten drei Ein- bzw. Ausgänge aufweisen, von denen mindestens einer als Heizleiterausführung dient. Diese vorteilhafte Ausführungsform gewährleistet einen kleinen Bauraum für die erfindungsgemäße Vorrichtung sowie eine kostengünstige und wirtschaftliche Herstellbarkeit, da die Anschlußelemente im Gegensatz zum bekannten Stand der Technik in entsprechenden Großserienfertigungen hergestellt werden können. Die Form der erfindungsgemäßen Anschlußelemente kann dabei entsprechend den Anforderungen im Motorraum der Fahrzeuge Y-förmig oder T-förmig ausgebildet sein. Diese vorteilhaften Ausführungsformen erlauben dem Anwender vielfältige Gestaltungsmöglichkeiten, so daß die notwendigen Leitungen für die Scheibenwaschanlagen entsprechend optimal dimensioniert werden können.

Weiterhin wird durch die gewählte Geometrie der Anschlußelemente eine sichere und dichte Verbindung zwischen den Anschlußelementen und den Leitungen realisiert, ohne daß diese über zusätzliche Befestigungselemente, wie Schellen und ähnliches noch gesichert werden müssen.

Ein weiterer Vorteil wird darin gesehen, daß die Anschlußelemente in einer weiteren Ausführungsform der erfindungsgemäßen Vorrichtung aus einem thermoplastischen Material herstellbar sind, welches zum einen wirtschaftliche Aspekte betont, zum anderen der Vorrichtung ein reduziertes Gewicht verleiht, wobei die Diffusionsdichtigkeit und die Beständigkeit gegen den in Scheibenwaschanlagen verwendeten Medien gewährleistet ist.

Diese einfach zu montierende erfindungsgemäße Vorrichtung weist vorteilhafterweise an wenigsten einem freien Ende des aus dem Lumen der Leitung nach außen geführten Heizleiters ein Kontaktelement auf, welches den Anschluß zur Stromversorgung des Fahrzeuges herstellt. Diese den neuesten Standards der Fahrzeugindustrie entsprechenden Kontaktelemente stellem im Gegensatz zu dem im bekannten Stand der Technik verwendeten Anschlußenden bzw. Kontaktfahnen eine schnell zu montierende, dauerhaft funkionierende und nicht korrodierende Anschlußstelle dar.

Die erfindungsgemäße Vorrichtung kann somit in der betreffenden Scheibenwaschanlage des Fahrzeuges in Großserienferigung am Fließband schnell und damit wirtschaftlich, sicher, sowie ohne maschinelle Hilfsvorrichtungen in den betroffenen Fahrzeugen installiert werden. Sie ist jederzeit sortenrein recycelbar.

Im folgenden soll an zwei, die Erfindung nicht beschränkenden Figuren, diese näher beschrieben werden.

Es zeigt:
- Figur 1:: Schnittdarstellung durch eine erfindungsgemäße Vorrichtung
- Figur 2:: Schnittdarstellung eines Anschlußelementes, eines Abdichtelementes sowie eines Abdeckelementes.

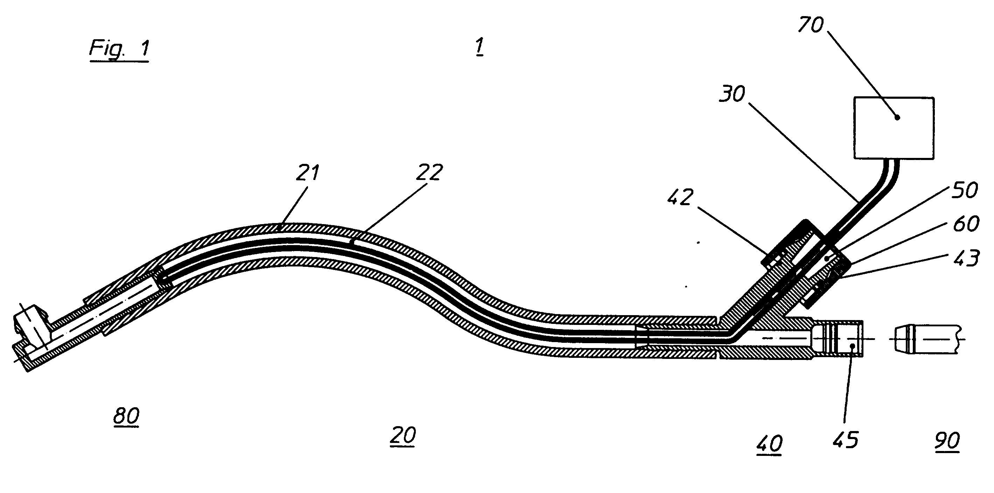

In Figur 1 ist die erfindungsgemäße Vorrichtung (1) zum Einsatz in Scheibenwaschanlagen von Fahrzeugen dargestellt. Diese im fertigmontierten Zustand dargestellte Vorrichtung (1) besteht aus dem Anschlußelement (40) der Leitung (20) und einem Endstück (80). Im Lumen (22) der Leitung (20), welches durch die Wandung (21) definiert ist, befindet sich der Heizleiter (30). In diesem Beispiel ist der Heizleiter (30) so verlegt, daß ausgehend vom Kontaktelement (70) die Hinleitung über das Abdeckelement (60), durch das Abdichtelement (50) und das Anschlußelement (40) in das Lumen (22) der Leitung (20) bis zu dem am anderen freien Ende befindlichen Endstück (80) verläuft und nach einem Bogen wieder durch das Lumen (22) der Leitung (20) bis zum Kontaktelement (70) zurückgeführt ist. Das Y-förmige Anschlußelement (40) weist an dem umgrenzenden Rand (42) eine von diesem wegragende Abkragung (43) auf, hinter der das Abdeckelement (60) rastend hintergreift. In dieser Position wird das Abdichtelement (50) durch das Abdeckelement (60) so komprimiert, daß der Heizleiter (30) gegen das im Lumen (22) der Leitung (20) befindliche Strömungemedium isoliert ist. Am freien Ende (45) des Anschlußelementes (40) ist eine Aufnahmeöffnung für das Einführen eines Verbindungselementes (90), durch welches die Vorrichtung (1) mit dem Strömungsmedium gespeist wird. Das Kontaktelement (70) stellt die Verbindung zur Stromversorgung des Fahrzeuges her.

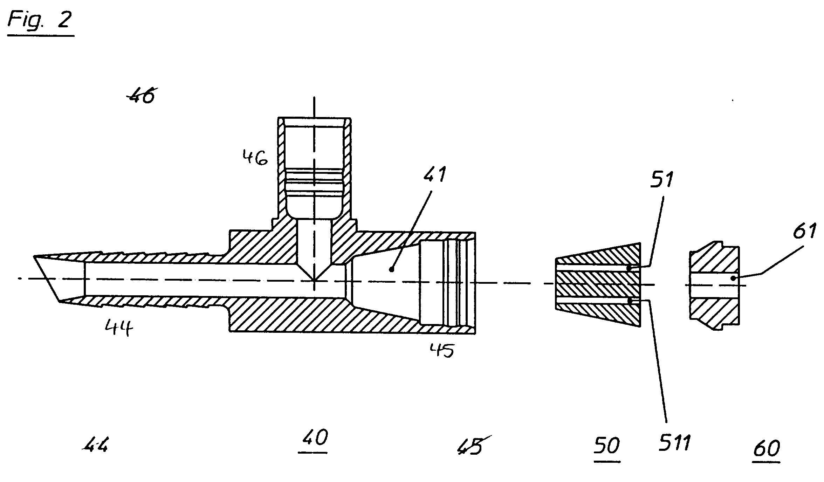

In Figur 2 ist eine Schnittdarstellung durch das Anschlußelement (40) mit dem noch nicht montierten Abdichtelement (50) und dem Abdeckelement (60) dargestellt. Bei diesem T-förmigen Anschlußelement (40) besteht am freien Ende (44) die Möglichkeit, eine Leitung für ein Strömungsmedium aufzubringen, welche durch die dargestellte sägezahnförmige Geometrie des freien Endes (44) des Anschlußelementes (40) ohne zusätzliche Befestigungelemente fixierbar ist. Am anderen freien Ende (45) des Anschlußelementes (40) befindet sich die Aufnahmeöffnung (41), in welche das Abdichtelement (50) positionierbar ist. Bei dem beispielhaft verwendeten Abdichtelement (50) sind zwei durchgehende Öffnungen (51, 511) axial eingebracht, die der Durchführung eines Heizleiters dienen. Im Abdeckelement (60), welches hier als Kappe ausgeführt ist, befindet sich die Öffnung (61), durch welche der Heizleiter aus dem Abdichtelement (50) durch das Abdeckelement (60)hindurchführbar ist.
In diesem Ausführungsbeispiel wird das Abdichtelement (50) im Anschlußelement (40) so fixiert, daß das Abdeckelement (60) nach dem Abdichtelement (50) in das freie Ende (45) des Abdeckelementes (60) eingeführt und an einem Hinterschnitt rastend hintergreift. Am freien Ende (46) des T-förmigen Anschußelementes (40) besteht die Möglichkeit des Anschlusses weiterer Leitungen für die Zuführung oder Abführung des Strömungsmediums für die Scheibenwaschanlage des Fahrzeuges.

## Patentansprüche

1. Vorrichtung (1) zum Einsatz in Scheibenwaschanlagen von Fahrzeugen zur Beheizung von durch eine Leitung (20), mit einem durch eine Wandung (21) definierten Lumen (22) fließenden Strömungsmedium, einem elektrischen Heizleiter (30), wenigstens einem Anschlußelement (40), einem Abdichtelement (50) und einem Abdeckelement (60), wobei sich der Heizleiter (30) frei im Lumen (22) der Leitung (20) erstreckt und gegen die im Lumen (22) der Leitung (20) fließenden Strömungsmedien isoliert ist und wobei der Heizleiter (30) durch die Anschlußelemente (40) aus dem Lumen (22) der Leitung (20) nach außen geführt und elektrisch angeschlossen ist,
dadurch gekennzeichnet,
daß das Abdichtelement (50) ein größeres Volumen aufweist, als die kommunizierende Aufnahmeöffnung (41) des Anschlußelementes (40), wobei das Abdichtelement (50) aus einem elastisch verformbaren Material besteht, daß das Abdichtelement (50) wenigstens eine in seiner Abmessung mit einem größeren Durchmesser als der Heizleiter (30) durchgehende Öffnung (51) aufweist und durch wenigstens ein lösbar mit dem Anschlußelement (40) verbundenen Abdeckelement (60) mit diesem fixiert ist.

2. Vorrichtung nach Anspruch 1, dadurch gekennzeichnet, daß das Abdichtelement (50) eine größere axiale Abmessung aufweist als die kommunizierende Aufnahmeöffnung (41) des Anschlußelementes (40).

3. Vorrichtung nach einem der vorhergehenden Ansprüche, dadurch gekennzeichnet, daß das Abdichtelement (50) eine größere radiale Abmessung aufweist als die kommunizierende Aufnahmeöffnung (41) des Anschlußelementes (40).

4. Vorrichtung nach einem der vorhergehenden Ansprüche, dadurch gekennzeichnet, daß das Abdichtelement (50) lösbar mit dem Anschlußelement (40) verbunden ist.

5. Vorrichtung nach einem der vorhergehenden Ansprüche, dadurch gekennzeichnet, daß das Abdichtelement (50) eine kegelstumpfförmige Gestalt aufweist.

6. Vorrichtung nach einem der vorhergehenden Ansprüche, dadurch gekennzeichnet, daß das Abdichtelement (50) eine zylindrische Gestalt aufweist.

7. Vorrichtung nach einem der vorhergehenden Ansprüche, dadurch gekennzeichnet, daß das Anschlußelement (40) wenigstens drei Ein- bzw. Ausgänge aufweist, von denen mindestens einer als Heizleiterausführung dient.

8. Vorrichtung nach einem der vorhergehenden Ansprüche, dadurch gekennzeichnet, daß die Anschlußelemente (40) Y-förmig ausgebildet sind.

9. Vorrichtung nach einem der vorhergehenden Ansprüche, dadurch gekennzeichnet, daß die Anschlußelemente (40) T-förmig ausgebildet sind.

10. Vorrichtung nach einem der vorhergehenden Ansprüche, dadurch gekennzeichnet, daß an wenigstens einem freien Ende des aus dem Lumen (22) der Leitung (20) nach außen geführten Heizleiters (30) ein Kontaktelement (70) angeordnet ist, welches den Anschluß zur Stromversorgung des Fahrzeuges herstellt.
